# EUROPEAN PATENT SPECIFICATION

(11) **EP 2 411 751 B1**
(45) Date of publication and mention of the grant of the patent: **23.01.2013**
(21) Application number: 10706199.6
(22) Date of filing: 23.02.2010
(51) Int. Cl.: F27B 14/06, F27B 14/14, C04B 35/83, C04B 35/573

(54) **INDUCTION FURNACE AND INFILTRATION PROCESS**
INDUKTIONSOFEN UND INFILTRATIONSPROZESS
FOUR À INDUCTION ET PROCÉDÉ D'INFILTRATION

(30) Priority: 24.03.2009 IT RM20090139
(43) Date of publication of application: 01.02.2012
(73) Proprietor: Freni Brembo S.p.A., 24035 Curno (Bergamo) (IT)
(72) Inventor: RINALDI, Stefano, I-26864 Ospedaletto Lodigiano (IT); MAURI, Bernardino, I-23900 Lecco (IT)
(74) Representative: Carangelo, Pierluigi
(86) International application number: PCT/EP2010/052300
(87) International publication number: WO 2010/108744

(56) References cited:
- EP-A- 1 124 074
- WO-A-2007/063562

## Description

The present disclosure refers to an induction furnace and in particular to an induction furnace as defined in the preamble of appended claim 1. The present disclosure also refers to an infiltration process.

The present application claims the priority of Italian Patent Application No. RM 2009 A 000139 filed on March 23, 2009 which is entirely incorporated herein by reference.

The use of ceramic composite materials is known in various applications, where a high impact, compression and temperature resistance is required, which are characteristics that cannot be ensured by simple ceramic materials, due to their intrinsic fragility.

In particular, ceramic composite materials are known for milling operations, for example for fabricating discs for disc brakes and more particularly for manufacturing the braking bands of discs for disc brakes, by infiltration of silicon in a matrix comprising bundles of carbon filaments and carbon. Such infiltration usually takes place at a temperature at which the silicon is in a melted state.

According to the known art, the preparation of such composite materials may be accomplished by:
- mixing the filament bundles with aggregating resin, pitch and other additives;
- putting the obtained mixture into a mould in order to provide a shaped semifinished workpiece by heating and pressurizing;
- performing a first curing in the furnace of the semifinished workpiece at a temperature such as to cause carbonization or pyrolysis of the resin.

Due to this curing, the semifinished workpiece acquires a certain porosity because of the loss of volatile material at carbonization or pyrolysis temperature of the resin.

Afterwards, the cured semifinished workpiece is subject to an infiltration process comprising a further curing with the material to be infiltrated, which in this case is silicon. Such curing takes place at a temperature such as to cause the silicon to melt and to infiltrate within the pores of the perform.

As is known, above said infiltration step (which in this case is also called silication) requires a lot of time and is very expensive. According to the known art, such step entails the heating of silicon between 1400°C and 1700°C in order to melt the silicon and comprises a pressure reduction by means of a vacuum pump. To this end, the use of specific furnaces is known, which are such as to provide the desired temperatures and which are able to be put under vacuum. The furnaces which are generally used are essentially of two types: the so called discontinuous furnaces ("batch" furnaces in English) and tunnel furnaces.

The batch type furnaces comprise a loading step of a quantity of material equal to their capacity, a heating step, a temperature holding step under vacuum for silication and a cooling step. The cycle comprising heating, temperature holding and cooling has a duration which varies between 24 and 48 hours, in order to allow the effective infiltration which takes about 10 minutes.

A batch furnace, besides the structural complexity due to the fact that it has to withstand the external pressure, has the drawback of having to be completely loaded and of being unsuitable for the production of small series or of single pieces, this drawback being aggravated by the fact that at least 24 hours are required for manufacturing the product.

On the other hand, tunnel furnaces require materials to be treated to be loaded in a corresponding loading station, their passage through the heating zone and the unloading from an unloading station. Although they allow for a continuous flow of produced material, such furnaces have the drawback of a still greater structural complexity with respect to batch furnaces: in this respect, it is to be noted that the material has to pass through an area where a vacuum is produced.

The patent application PCT/IT2005/000708 describes an induction furnace comprising an infiltration crucible made of carbon/carbon material, which allows the time required for the infiltration process to be greatly reduced with respect to batch or tunnel furnaces of above said type.

Therefore, the need is felt, in particular for a continuous and fast production of single workpieces, of providing a further improved infiltration furnace, with respect to process efficiency and cost, as well as regarding the homogeneity of results and security, with respect to an induction furnace, as described in patent application PCT/IT2005/000708.

Therefore the object of the present disclosure is to provide and induction furnace which is such to meet the above indicated needs.

This object is achieved by means of an induction furnace as described in appended claim 1, in its general form and in the dependent claims in preferred embodiments of the same.

Other objects of the present disclosure is to provide an infiltration process according to claim 15 and a disc for a disc brake according to claim 19.

Further features and advantages of the invention will be more easily understood by means of following detailed description of some of its preferred embodiments, which are illustrative and therefore in no way limiting with respect to appended figures, wherein:
- fig. 1 shows a schematic plane lateral elevation view, wherein some parts are shown in a section, of an induction furnace, wherein such furnace is shown in a first operating condition;
- fig. 2 shows a schematic plane lateral elevation view, wherein some parts are shown in a section, of the induction furnace of fig. 1, wherein the furnace is shown in a second operating condition;
- fig. 3 shows a lateral sectional plane view of an insulating ring, being part of furnace of fig. 1;
- fig. 4 shows a lateral sectional plane view of a component of furnace of fig. 1, according to a variant embodiment;
- fig. 5 shows a lateral sectional plane view of a component of furnace of fig. 1, according to a variant embodiment;
- fig. 6 shows a top view of a further component of furnace of fig. 1; and
- fig. 7 shows a simplified flowchart of an infiltration process.

In the appended figures, same or similar elements are provided with the same reference symbols.

With reference to appended figures, 1 generally indicates an induction furnace comprising a box-like housing structure 2, preferably comprised of a carpentry framework, including walls defining an internal chamber 3 of induction furnace 1.

According to an embodiment, the induction furnace 1 is in particular a silication furnace, and is preferably provided for silication of plate-like semifinished workpieces, such as discs for disc brakes or brake bands for discs of disc brakes, for example made of composite ceramic materials.

In the example shown, the induction furnace 1 comprises a vacuum pump 4 provided on the outside of the internal chamber 3, for generating a required vacuum in the internal chamber 3. An opening 5, provided in one of the walls of housing structure 2, provides a connection between the vacuum pump 4 and internal chamber 3.

Preferably, the vacuum pump 4 is such as to reduce the operating pressure from the atmospheric level to a value between 0,01 and 500 mbar, and more preferably between 1 and 2 mbar, including the limiting values.

The internal chamber 3 has internal walls provided with a thermal insulating lining. In a particularly preferred embodiment, such lining comprises panels 6 made of graphite felt, mated with internal walls of chamber 3.

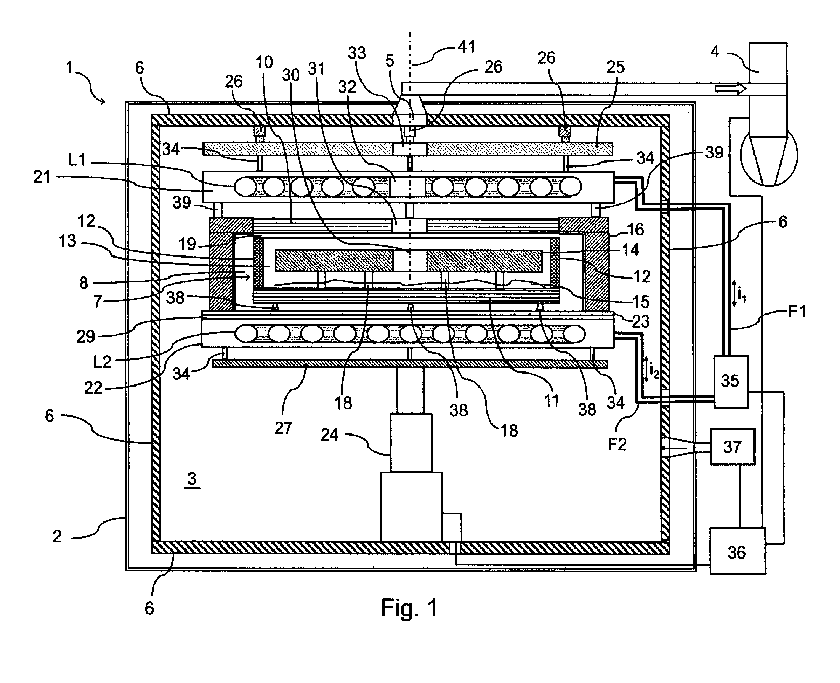

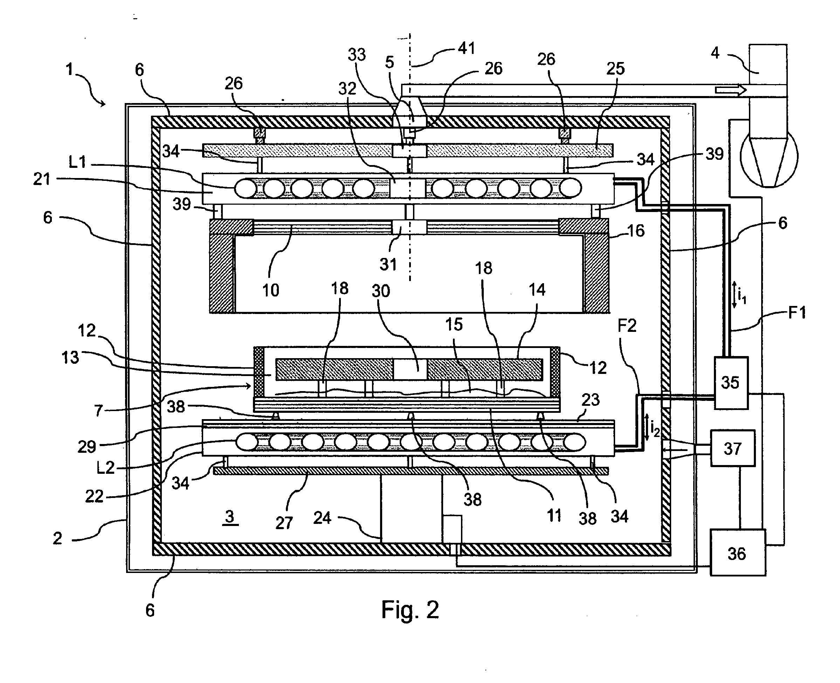

The induction furnace 1 comprises an infiltration crucible 7, comprising an infiltration chamber 13 inside which the melting, i.e. the infiltration process, of material 15 to be infiltrated takes place. In the example shown in fig. 1 and 2, inside the infiltration chamber 13 of infiltration crucible 7 a semifinished workpiece to be infiltrated 14 is received. According to an embodiment, the semifinished workpiece to be infiltrated 14 is a plate, which is shaped like a ring or disc, which has already been subject to a carbonization (or pyrolysis) step, for obtaining a porosity of the same, which is therefore a porous object. In the specific example shown, the semifinished workpiece to be infiltrated 14 is comprised of a braking band for a disc of a disc brake 14, wherein a substantially circular central opening 30 is defined.

In a particularly preferred embodiment, a supporting device 18 for supporting the semifinished workpiece 14 to be infiltrated inside the infiltration chamber 13 is provided inside the same chamber. Such a supporting device 18 comprises a plurality of supporting elements 18, or supporting feet 18.

Preferably, the volume of the infiltration chamber 13 is at least two times the volume of the semifinished workpiece 14 to be infiltrated, in order to at least partially fill the gap between the semifinished workpiece 14 to be infiltrated and internal walls of chamber 13 with the material 15 to be infiltrated into the pores of the semifinished workpiece 14 to be infiltrated. Preferably, the material 15 to be infiltrated is silicon, for example pure silicon, or a silicon, aluminum or copper alloy, in a granular or powdery form. In the specific case where the semifinished workpiece 14 to be infiltrated is a braking band of a disc for a disc brake, the infiltration chamber 13 is for example sized for allowing the processing of one single semifinished workpiece 14 to be infiltrated.

The infiltration crucible 7 comprises a first 10 and second 11 radiation plate, in particular thermally radiating plates, which are substantially parallel and spaced from each other. The radiation plates 10, 11 respectively define the upper and lower wall of infiltration chamber 13, which is therefore interposed between such plates 10, 11, in order to be heated by said plates up to the desired temperature.

The infiltration crucible 7 also comprises an annular lateral wall 12, laterally defining the infiltration chamber 13. In the example shown, the annular lateral wall 12 lies on the radiation plate 11 and is spaced from the radiation plate 10 (for example at a distance of 1-2 cm), therefore defining a gap 19 between the same. In an alternative embodiment, the radiation plate 10 abuts against the annular lateral wall 12, so that the gap 19 is not present.

According to an embodiment, both radiation plates 10, 11 substantially have a disc like shape and the annular lateral wall 12 is a cylindrical wall.

The radiation plates 10, 11 are made of susceptor material, i.e. a material suitable for absorbing electromagnetic energy and converting this energy to heat.

In a currently preferred embodiment, both radiation plates 10, 11 are made of carbon/carbon material (C/C). Preferably also the annular lateral wall 12 is made of susceptor material and more preferably of C/C, so that the walls of infiltration crucible 7 are entirely made of C/C. According to an embodiment, the type of C/C forming the walls of infiltration crucible 7 is a carbon/carbon material having long fabric-like fibers, of the 0/45° orientation type, in the radiation plates 10, 11, whereas the material inside the circumference of annular lateral wall 12 is unidirectional. Preferably, the density of carbon/carbon material used for fabricating the infiltration crucible 7, is between 1 and 1,9 g/cm³, including the limiting values, and more preferably the density is equal to 1,7 g/cm³.

According to an alternative embodiment, which is currently preferred, the walls (i.e. both radiation plates 10, 11 and the annular lateral wall 12) of the infiltration crucible 7 are made of graphite or other suitable susceptor material.

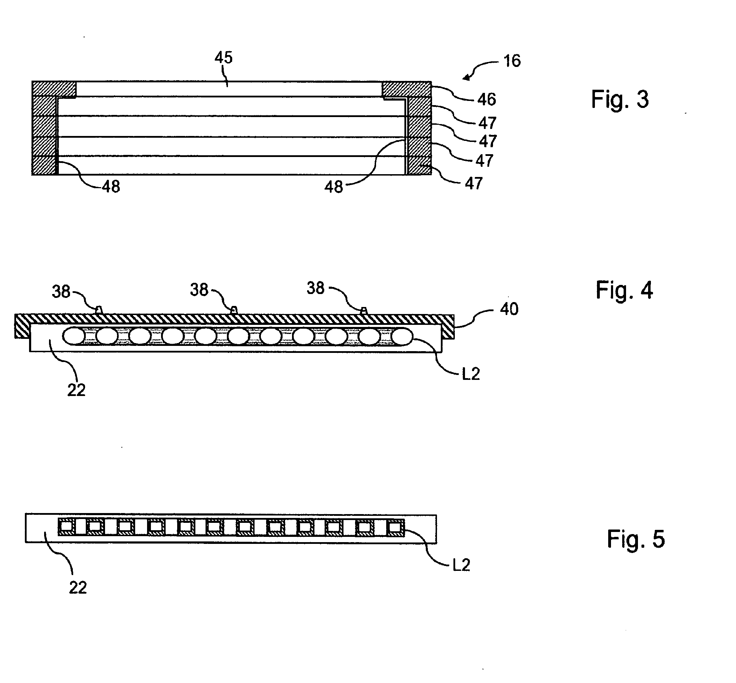

As shown in fig. 1 and 2, in a particularly advantageous embodiment, the induction furnace 1 also comprises an insulating annular wall 16, or insulating ring 16, of thermally insulating material, for example graphite felt, which at least laterally defines an insulating chamber 8, which extends around the infiltration chamber 13. Preferably, but non in a limiting way, the upper or lower wall of insulating chamber 8 are at least partially comprised of one of the two radiation plates 10, 11. In the particular example shown, the radiation plate 10 upwardly closes, at least partially, the insulating chamber 8 and is fixed at an opening 45 of insulating ring 16. The latter preferably has an L-shaped profile, as shown in fig. 3, and is preferably provided by axially overlaying and fixing a plurality of rings 46, 47 to each other, the rings being made of relatively stiff material, wherein one peripheral ring 46 has a smaller internal diameter and a wider total width with respect to the other rings 47. Advantageously, an internal surface of insulating ring 16, of relatively stiff material, is covered by a protective foil of CFRC (carbon fiber reinforced carbon), and is made of less rigid material, having for example a thickness of 1,5 mm.

According to the embodiment shown in fig. 1, the insulating ring 16 has an internal diameter which is greater than the external diameter of lateral wall 12 of crucible, so that the distance between the internal surface of insulating ring 16 and the external surface of lateral wall 12, when the furnace is in the condition of fig. 1, is at least equal to a some cm, for example 5 cm, in order to provide a gap between said surfaces.

The induction furnace 1 also comprises at least an induction coil L1, L2, which is housed in the internal chamber 3 which is supplied with at least an electric current signal i₁, i₂ for heating, by induction, both radiation plates 10, 11.

The induction furnace 1 comprises an alternate current generator 35 connected to the induction coil L1, L2 by means of at least a supply line F1, F2. Such current generator 35 is such as to output at least an alternate electric current signal i₁, i₂ having a preferred frequency range of 1 kHz-30 kHz.

In particular, the induction coil L1, L2 comprises a first L1 and second L2 induction spiral coil. Each of these spiral coils L1, L2 is set at a relatively shorter distance from a respective associated radiation plate 10, 11 and at a relatively longer distance from the other radiation plate 10, 11. In fact, in fig. 1 and 2, it is to be noted that the induction coil L1 is positioned at a relatively shorter distance with respect to the radiation plate 10 and at a relatively longer distance with respect to the radiation plate 11, whereas induction coil L2 is positioned at a relatively shorter distance from radiation plate 11 and at a relatively longer distance from radiation plate 10. It may therefore be said that induction coil L1 is associated, or mainly associated, to radiation plate 10, whereas induction coil L2 is associated, or mainly associated, to radiation plate 11, since each of these coils is provided for mainly heating the associated radiation plate, i.e. plate 10 or plate 11. Obviously, each induction coil L1, L2, besides heating the respective associated radiation plate 10, 11, will also heat the other radiation plate 10, 11, possibly in a non negligible way, but obviously to a lesser extent, due to the different distance, since it is known that the intensity of the magnetic field decreases with the square of the distance.

Obviously, if the lateral wall 12 of crucible 7 is also made of susceptor material, it too will possibly experience the effects of the magnetic field produced by both induction coils L1, L2, but to a lesser extent with respect to radiation plates 10, 11, and therefore the contribution to the heating of the infiltration chamber 13 due to lateral annular wall 12 will be possibly non negligible, but nonetheless smaller with respect to the contribution of both radiation plates 10, 11.

As shown, in a currently preferred embodiment, the first and second induction coil L1, L2 are planar spiral induction coils, which are substantially parallel to each other and to the radiation plates 10, 11. For example, each of the induction coils L1, L2 are formed according to a planar Archimedean spiral, or Fermat spiral, or a logarithmic spiral or according to any further type of planar or substantially planar spiral (the term "substantially" refers for example to embodiments of spirals which are not exactly planar, but approximately planar, due to technological reasons).

According to an embodiment, each spiral induction coil L1, L2 comprises a conductor, for example made of copper, which is coiled so as to forma a spiral. Preferably, such conductor is a pipe and more preferably within such a pipe a cooling liquid may flow, for example flowing water. In fig. 1 and 2, this pipe is shown with a circular section. In the modification of fig. 5, the pipe has a quadrangular section, for example a square section. In fig. 5 it may be noticed that the pipe may be hollow for allowing the cooling liquid to flow inside the same.

According to a particularly advantageous embodiment, the induction coils L1 and L2 are independent and separated coils, more precisely they belong to different circuits, each being supplied with a respective supply current i₁, i₂ by means of a respective supply line F1, F2. In this way, it is advantageously possible to independently supply, by means of the generator 35, both coils L1, L2, for example establishing a ratio between the supply currents i₁, i₂, in order to uniformly heat the infiltration chamber 13, for possibly compensating different distances between each induction coil L1, L2 and associated radiation plate 10, 11, or for generally compensate any other type of asymmetry which causes a non uniform or non optimal heating of infiltration chamber 13. To this end, the induction furnace 1 may be provided with an electronic control system 36, for controlling the infiltration process, in general, and also in particular the current generator 35, for setting said ratio between currents. By means of such electronic control system 36 it is also possible to control the current generator 35 in order for the same to output supply currents i₁, i₂ at different frequencies.

According to an embodiment, the supply lines F1, F2 are at least partially comprised of flexible conductors, in order to allow a mutual movement between the induction coils L1, L2.

According to an embodiment, a first 21 and second 22 protective shield are associated to first and second induction coil L1, L2, respectively. Preferably, such protective shields 21, 22 are respectively comprised of a first 21 and second 22 protective plate. From now on, in the present description, the protective shields 21, 22 will be called protective plates 21, 22, without introducing any limitation.

Preferably, each of the induction coils L1, L2 is at least partially embedded, or more preferably totally embedded (as in the example of appended figures), inside the respective protective plate 21. 22. The protective plates 21, 22 are preferably made of ceramic material. For example, the protective plates 21, 22 are made of refractory cement. Advantageously, the protective plates 21, 22 ensure a certain thermal insulation of spiral induction coils L1, L2, fix said coils for avoiding a dangerous relative movement (possibly due to thermal gradients) among the loops of same coil and prevent such induction coils L1, L2 from being dangerously impinged by material to be infiltrated which is ejected during melting. It is to be noted that, advantageously, if the induction coils L1, L2 are at least partially embedded in the protective plates 21, 22, due to stiffness, or dimensional stability, conveyed by protective plates 21, 22 to the induction coils L1, L2, it is possible to use for the induction furnace 1 induction coils L1, L2 with densely packed loops, since the distance between adjacent loops may be arbitrarily reduced, without causing possible short circuits.

According to an embodiment, at least one of the protective plates 20, 21 is used as a supporting element for coupling a respective radiation plate 10, 11 to the box-like housing structure 2. Preferably, both protective plates 20, 21 are used as a supporting element for coupling the respective radiation plate 10, 11 to the box-like housing structure 2. In the particular embodiment shown in fig. 1 and 2, with particular reference to fig. 2, it may be noticed that the protective plate 21 is used as a supporting element of the radiation plate 10, which is suspended to the same by means of the annular insulation wall 16 and by means of spacer arms 39, and that the protective plate 22 is used as a supporting element for radiation plate 11, which is lying on the same.

It is also to be noted that in the particular example shown, the protective plate 21 is suspended, indirectly, in the example shown, to a wall of the internal chamber 3, whereas the protective plate 22 indirectly lays, in the example shown, against an opposed wall of internal chamber 3.

Preferably, the radiation plate 11 does contact the protective plate 22 not directly but by interposing at least a shield or protective lining 23, 29, comprising protruding spacer studs 38, on which the radiation plate 11 is effectively supported. According to a first embodiment shown in fig. 1 and 2, the protective lining comprises an intermediate felt layer 29 and a tile made of boron nitride 23, with integrated studs 38, and which is supported on the intermediate felt layer. With reference to fig. 4, according to an alternative embodiment, the protective lining comprises a mask 40 of refractory cement, which is supported on the protective plate 22 and is shaped in order to partially envelope such protective plate 22. Also in this case, the spacer studs 38 are preferably integrally formed with the mask 40.

According to a particularly preferred embodiment, the induction furnace 1 also comprises a supporting device 24, for coupling an induction coil (in the example the induction coil L2) or movable induction coil L2, to the housing structure 2, the supporting device 24 being controllable in order to move the movable induction coil L2 with respect to housing structure 2, for varying, by controlling such supporting device 24 for example by the control unit 36, the distance between the induction coils L1, L2, for setting the coils L1, L2 in a first operating condition, shown in fig. 1, wherein the induction coils L1, L2 are relatively proximal to each other, and a second operating condition, shown in fig. 2, wherein the induction coils L1, L2 are relatively distal to each other. It is to be noted that in the particular example shown, since the induction coil L2 is embedded in the protective plate 22, the controllable supporting device 24 also allows the coupling of the protective plate 22, or movable protective plate 22, to the housing structure 2. In fact, the supporting device 24 may be controlled for moving the protective plate 22 with respect to the housing structure 2 in order to vary the distance between the protective plates 21, 22, for setting the coils L1, L2 in a first operating condition, shown in fig. 1, wherein the induction coils L1, L2 are relatively proximal to each other, and a second operating condition, shown in fig. 2, wherein the induction coils L1, L2 are relatively distal to each other.

In the example shown, above said controllable supporting device 24 comprises a pneumatic cylinder.

According to a particularly advantageous embodiment, the induction furnace 1 also comprises a supporting device 25, 26, 34 for coupling the other induction coil L1 to the housing structure 2, said supporting device 25, 26 comprising at least a position adjusting coupling element 26, for ensuring a proper positioning of induction coil L1 with respect to induction coil L2 when the induction furnace 1 is in the first operating condition (fig. 1). It is to be noted that in the particular example shown, since the induction coil L1 is embedded in the protective plate 21, the supporting device 25, 26, 34 allows the protective plate 21 to be coupled to the housing structure 2, so that the at least one position adjusting coupling element 26 ensures the correct positioning of protective plate 21 with respect to protective plate 22, when the induction furnace 1 is in the first operating condition (fig. 1).

In the particular example shown, the at least one position adjusting coupling element 26 is comprised of a plurality of coupling elements 26, of variable length, such as elastic pistons, three of which are shown in fig. 1 and 2, without introducing any limitation. It is apparent that, instead of the elastic pistons 26, it is possible to use position adjusting coupling elements 26 of a different kind, such as usual sliding guides or mechanical coupling elements with a clearance. It is to be noted that, advantageously, in the example shown, the position adjusting coupling elements 26 allow the absorption of possible stresses produced by the movement of protective plate 22 during transitioning from operating condition of fig. 2 to operating condition of fig. 1, ensuring a proper abutting position between insulating ring 16 and protective plate 22. Moreover, such coupling elements 26 advantageously allow the compensation of thermal strains possibly generating dangerous stresses inside the internal chamber 3, when the furnace 1 is in the operating condition of fig. 1.

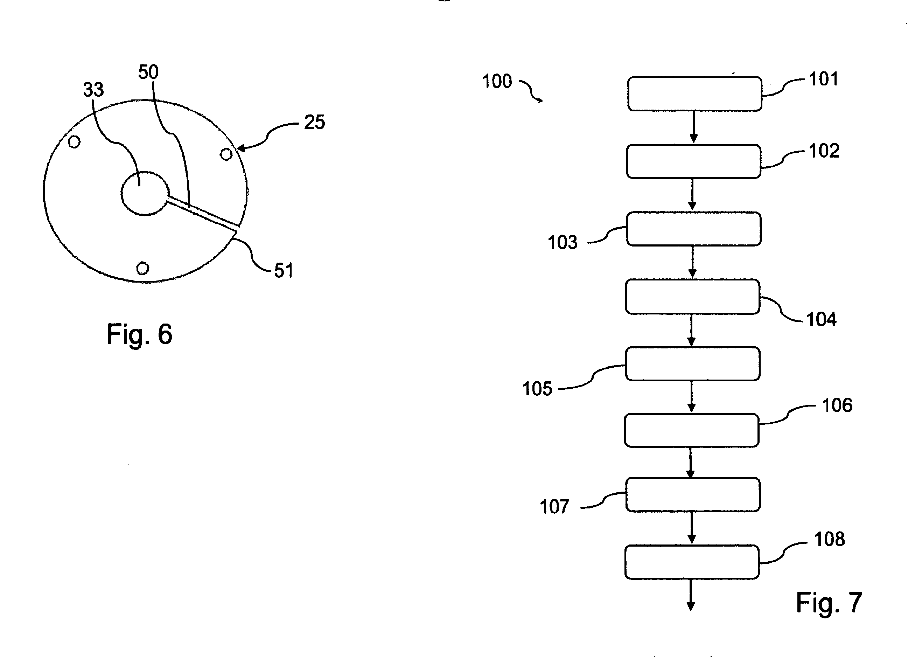

According to another embodiment, at least one of the supporting devices of coils L1, L2 comprises a metal support plate 25, 27. In the particular example shown, in particular, a pair of substantially disc-shaped metal support plates 25, 27, is provided, which are associated to the protective plate 21 and protective plate 22, respectively, and which are connected to the same by spacer arms 34. With reference to fig. 6, showing only plate 25, in order to avoid, during operation of furnace 1, the generation, by induction, of undesirable electric currents inside such metal support plates 25, 27, such metal support plates 25, 27 are advantageously provided with a through cut 50, extending from a central portion 33 to a peripheral portion 51 of plates.

With reference to fig. 1, according to a particularly advantageous embodiment, at least one of radiation plates 10, 11, in the example plate 10, comprises at least a first through opening 31 communicating with the infiltration chamber 13, for allowing the extraction, by means of vacuum pump 4, of vapors generated inside the infiltration chamber 13, during operation of furnace 1. Preferably, the first opening 31 is provided on plate 10 in a substantially central position. Preferably, also the protective plate 21 of coil L1 associated to radiation plate 10, where the first opening 31 is defined, comprises a second through opening 32, in front of first opening 31 of radiation plate 10, and preferably axially aligned to the same. More preferably, the metal support plate 25 comprises a third opening 33 in front of the first 31 and second 32 opening, aligned with the same. In this way, advantageously, an annular semifinished workpiece to be infiltrated 14, may be positioned inside the infiltration chamber 13 so that the correct opening 30 is axially aligned with openings 31, 32, 33, therefore creating an extraction path of vapors, which is the most direct possible towards the opening 5 provided in the housing structure, for connecting the vacuum pump 4, preferably axially aligning the latter to said openings 30, 31, 32, 33. It is to be noted that as in the particular example shown in fig. 1, openings 30, 31, 32, 33 and 5 are axially aligned to each other along axis 41.

The induction furnace 1 also preferably comprises a system 37 for injecting a cooling fluid, for example nitrogen, inside the chamber 3, which is for example controlled by control unit 36. The induction furnace 1 preferably also comprises a forced convection cooling system, not shown.

With reference to fig. 7, a currently preferred embodiment of an infiltration process, generally indicated by 100, which may be performed by an induction furnace of above said type, will now be described. Such process 100 may be automatic or almost automatic, since it is directly controllable through control unit 36 of induction furnace 1, which is operatively connected to pneumatic cylinder 24, nitrogen injector 37, current generator 35, vacuum pump 4, and also to other possible components/transducers, which are included in the induction furnace 1, such as position sensors, temperature sensors, pressure sensors and to the forced convection cooling system.

The infiltration process 100 comprises an initial step 101 of presetting the induction furnace 1, in order to set it in the operating condition of fig. 2, wherein the induction coils L1, L2 are in the distal position.

The infiltration process 100 also comprises a loading step 102 of infiltration crucible 7, and in particular of crib formed by radiation plate 11 and annular wall 12, wherein the semifinished workpiece 14 to be infiltrated, such as a braking band for a disc of a disc brake, is positioned inside such crib 11, 12 with the material 15, such as silicon, to be infiltrated inside the pores of semifinished workpiece 14. Therefore, the exemplary infiltration process 100 is comprised, in a non limiting way, of a silication process of a porous semifinished workpiece 14 to be infiltrated. The loading of the crib 11, 12 may be conveniently performed by preemptively extracting the crib 11, 12 from chamber 3, for example by means of the fork of a robot (not shown). In this case, the loading step 102 comprises positioning the crib 11, 12 loaded with the semifinished workpiece 14 to be infiltrated and the silicon 15, on the protective plate 22, for example by means of said fork. Before loading the semifinished workpiece 14 to be infiltrated and silicon 15 into the crib 11, 12, a pre-treatment of crib 11, 12 may be envisaged, preferably, but not in a limiting way, the spraying of boron nitride onto the same, the plating by means of graphite paper and further spraying of boron nitride. The loading of semifinished workpiece 14 to be infiltrated may also comprise an automatic identification of type of semifinished workpiece 14 to be infiltrated (for example by means of said fork), for example in order to determine if the semifinished workpiece 14 to be infiltrated is relatively thick or thin and/or if its diameter is relatively larger or smaller. In this case there is also conveniently provided an inputting step or a transmission step to control unit 36 of at least an identification information, by means of said identification operation, regarding the type of semifinished workpiece 14 to be infiltrated.

The infiltration process 100 comprises a successive step 103 of moving the coil L2, and, in this example, also the respective protective plate 22, by means of cylinder 24 in order to bring the induction furnace 1 in the operating condition of fig. 1, wherein at least a partial closing of insulating chamber 8 is obtained, and wherein the annular insulating wall 16 is abutting against the movable protective plate 22. A proper abutment is also advantageously ensured by means of position adjusting coupling elements 26.

In a following step 104, the vacuum pump 4 is activated, for example through the control unit 36, in order to lower the internal pressure of chamber 3 of induction furnace 1 from a value approximately between 800 and 900 mbar to approximately 0.01 - 250 mbar, and preferably about 1 mbar.

In a further step 105, called heating and infiltration step, which is simultaneous with the step 104 of activating the vacuum pump 4, the induction coils L1, L2 are supplied with the alternate current signal having such a frequency and power to heat the susceptible parts of crucible 7, mainly the radiation plates 10 and 11. Such heating is mainly obtained by parasitic currents induced within both radiation plates 10 and 11 by the electromagnetic field generated by flowing of alternate current inside associated induction coils L1, L2. In this way, plates 10 and 11 radiate heat inside the infiltration chamber 13 up to a temperature, at which the material 15 to be infiltrated transitions to the melted state. In the case of silicon, plates 10 and 11 are heated until temperature inside the infiltration chamber 13 reaches about 1400°C to 1700°C, and preferably about 1500°C. In this range of temperatures, silicon 15 melts and penetrates inside the pores of semifinished workpiece 14 to be infiltrated. Moreover, in this step 105, induction coils L1, L2, besides heating by direct induction associated radiation plates 10, 11, also heat, by direct induction the semifinished workpiece 14 to be infiltrated, which, due to heating of chamber 13 as well as due to self-heating due to direct induction of parasitic currents in such semifinished workpiece 14 to be infiltrated, reaches an optimal state for infiltration with silicon 15. Possible vapors generated during this step 105 are drawn from vacuum pump 34, which remains active during the whole step 105.

Preferably, during the heating and infiltration step 105, supplied currents to induction coils L1, L2 are set and controlled by control unit 36, possibly also depending on the identification information regarding the particular type of semifinished workpiece 14 to be infiltrated, in order to ensure a uniform heating of infiltration chamber 14 and semifinished workpiece 14 to be infiltrated. Preferably, this step also comprises the determination and setting of a specific intensity for each current supplied to induction coils L1, L2, or the determination and setting of a ratio between these current values, in order to provide optimal heating of infiltration chamber and semifinished workpiece 14 to be infiltrated.

The infiltration process 100 preferably comprises a successive cooling step 106, with a closed crucible, wherein the induction furnace 1 is kept in the operating condition of fig. 1, wherein the electric supply of induction coils L1, L2 is interrupted, and nitrogen is introduced through the injection system 37, inside the chamber 3, up to a predetermined temperature threshold inside the insulation chamber 8, for instance equal to 800°C.

The infiltration process 100 preferably comprises a successive step 107 of cooling, with an open crucible, wherein the induction furnace 1 is brought in the operating condition of fig. 2, and wherein the forced convection cooling system is activated, until a predetermined temperature threshold is reached, for example 250°C.

There follows a successive step 108 of opening the induction furnace 1 and removing the crib 11, 12 of infiltration crucible 7, preferably by means of said robot fork. During the production cycle, steps 101 to 108 are iterated various times as described for sequential production of infiltrated workpieces.

Based on previous description, it is to be noted that the objects of the invention have been completely achieved.

In particular, the above described type of induction furnace allows completion of infiltration of semifinished workpiece within relatively short times, ensuring homogeneous production of infiltrated workpieces. In particular, the results of test fields have shown that the provision of the first L1 and second L2 spiral induction coils, each of the spiral coils L1, L2 being positioned at a relatively shorter distance with respect to a respective associated radiation plate 10, 11 and at a relatively longer distance with respect to the other radiation plate 10, 11 allows to obtain a particular homogeneous infiltration process. This is mainly due to the fact that thanks to the provision of the above features it is possible to better control the heating of each of the radiation plates in order to compensate possible structural asymmetries in the infiltration furnace or in the positioning of the piece to be infiltrated or to fulfill particular heating requirements. Moreover the provision of two spiral coils, as is evident from the above description, allows to easy charge and discharge the crucible, mainly because the crucible can be extracted from the furnace with a movement parallel to the radiation plates, thus further shortening the infiltration process and reducing the processing costs.

In a furnace according to the present invention the infiltration process may be performed in an cost-effective way, even on individual small sized workpieces, in an repeatable and secure way.

Obviously, the skilled in the art, in order to comply with specific and contingent needs, may introduce further modifications and variants to a furnace according to the present invention, which are nonetheless all included in the protection scope of the present invention, as defined in the following claims.

## Claims

1. Induction furnace (1) comprising:
- a box-like housing structure (2, 6), which defines an internal chamber (3) of the induction furnace (1);
- an infiltration crucible (7) housed in the internal chamber (3) and comprising a first (10) and second (11) mutually parallel and spaced away radiation plates, made of susceptor material, and an infiltration chamber (13), which is interposed between the radiation plates (10, 11) in order to be heated by the plates, the infiltration chamber being provided for housing a semifinished workpiece (14), to be subjected to infiltration, and infiltration material (15);
- at least an induction coil (L1, L2) housed in Lhe internal chamber (3) to be supplied with at least an electrical current (i₁, i₂) for induction heating of the radiation plates (10, 11);
**characterized in that**
the induction coil (L1, L2) comprises a first (L1) and second (L2) spiral induction coil, each of the spiral coils (L1, L2) being positioned at a relatively shorter distance with respect to a respective associated radiation plate (10, 11) and at a relatively longer distance with respect to the other radiation plate (10, 11).

2. Induction furnace (1) according to claim 1, wherein the first and second coil (L1, L2) are plane spiral induction coils, which are generally parallel to each other.

3. Induction furnace (1) according to any of preceding claims, also comprising a first and second protective shield (21, 22) which are associated to the first and second induction coil (L1, L2) respectively.

4. Induction furnace (1) according to claim 3, wherein said protective shields comprise a first and second protective plate (21, 22), in which the associated induction coil (L1, L2) is at least partially embedded.

5. Induction furnace (1) according to claim 4, wherein said protective plates (20, 21) are made of ceramic material.

6. Induction furnace according to any of the preceding claims, also comprising a support device (24), provided for coupling one of said induction coils (L2), or mobile induction coil (L2), to said housing structure (2), said support device being controllable for moving said mobile induction coil (L2) with respect to the housing structure (2), in order to vary the distance between said induction coils (L1, L2) by controlling said support device (24), in order to move said coils (L1, L2) between a first operating condition, wherein said coils (L1, L2) are relatively proximal to each other, and a second operating condition, wherein said coils (L1, L2) are at a relatively longer distance from each other.

7. Induction furnace (1) according to claim 6, further comprising a further support device (25, 26) for the other (L1) of said induction coils, said further support device (25, 26) comprising at least a coupling element (26) for adjusting the position, for ensuring a correct positioning of said other induction coil (L1) with respect to the mobile induction coil (L2), when the induction furnace (1) reaches the first operating condition.

8. Induction furnace (1) according to claims 6 or 7, wherein at least one of said support devices comprises a metal plate (25, 27) having a through cut (50), which extends from a central portion (33) to a peripheral portion (51) of said metal plate (25, 27).

9. Induction furnace (1) according to any of the preceding claims, wherein the infiltration crucible (7) comprises an annular wall (12) which lies against one of said radiation plates (10, 11).

10. Induction furnace (1) according to any of the preceding claims, wherein the first and second coil (L1, L2) are independent and separate from each other, each being such to be supplied from a respective source of electric current.

11. Induction furnace (1) according to claim 10, including a control system (36) for setting an intensity ratio between said electric currents.

12. Induction furnace (1) according to any of the preceding claims, wherein at least one (10) of said two radiation plates (10, 11) comprises at least a first through opening (31) which is in communication with the infiltration chamber (13), provided for allowing vapors formed inside said infiltration chamber (13) during operation of said furnace to be extracted.

13. Induction furnace (1) according to claim 12, as dependent from claim 4, wherein the protective plate (21), in which the coil associated to said radiation plate (10), provided with said first through opening (31), is embedded, comprises a second through opening (32) which is opposite to said first through opening (31).

14. Induction furnace (1) according to any of the preceding claims, wherein the induction furnace further comprises a lateral annular wall (16) made of thermal insulating material, which laterally defines an insulating chamber (8) surrounding the infiltration chamber (13), the insulating chamber (8) being upwardly and downwardly bounded by at least one of said radiation plates (10, 11).

15. Infiltration process (10) of a semifinished workpiece (14), comprising the steps of:
- introducing (102) said semifinished workpiece (14) into an induction furnace (1) comprising an infiltration crucible defining an infiltration chamber (13), a first (10) and second (11) mutually parallel and spaced away radiation plates, made of susceptor material, said furnace (1) also comprising at least an induction coil (L1, L2);
- heating (105) the infiltration chamber (13) by radiation, by heating the radiation plates (10, 11) by inductive effect:
**characterized in that**
the induction coil (L1, L2) comprises a first (L1) and second (L2) spiral coil, each of these spiral coils being positioned at a relatively shorter distance with respect to a respective radiation plate (10, 11) and at a relatively longer distance with respect to the other radiation plate (10, 11) and wherein the healing step comprises a step of heating each radiation plate (10, 11) by means of the spiral induction coil (L1, L2) associated to the same.

16. Infiltration process (100) according to claim 15, wherein the induction coils (L1, L2) are two separate and independent coils and wherein the heating step (104) comprises the step of supplying said coils with a respective electric current.

17. Infiltration process (100) according to claim 16, also comprising the step of establishing and setting a specific intensity level for each of said supplied currents, in order to obtain an uniform heating of said infiltration chamber and of said semifinished workpiece (14).

18. Infiltration process (100) according to any of claims 15 to 17, wherein said semifinished workpiece (14) is a braking band for a disc of a disc brake.

## Patentansprüche

1. Induktionsofen (1) mit:
- einem behälterähnlichen Gehäuseaufbau (2, 6), der eine Innenkammer (3) des Induktionsofens (1) definiert;
- einem Eindringungstiegel (7), der in der Innenkammer (3) untergebracht ist und eine erste (10) und eine zweite (11) gegenseitig parallele und beabstandete Abstrahlungsplatte, die aus einem Suszeptormaterial bestehen, und eine Eindringungskammer (13) aufweist, die zwischen die Abstrahlungsplatten (10, 11) zwischengefügt ist, um durch die Platten erwärmt zu werden, wobei die Eindringungskammer zum Unterbringen eines halbfertigen Werkstücks (14), das der Eindringung ausgesetzt werden soll, und zum Aufnehmen von Eindringungsmaterial (15) vorgesehen ist;
- zumindest einer Induktionsspule (L1, L2), die in der Innenkammer (3) vorgesehen ist, die mit zumindest einem elektrischen Strom (iᵢ, i₂) zum Induktionserwärmen der Abstrahlungsplatten (10, 11) versorgt werden soll;
**dadurch gekennzeichnet, dass**
die Induktionsspule (L1, L2) eine erste (L1) und eine zweite (L2) Spiralinduktionsspule aufweist, wobei jede der Spiralspulen (L1, L2) in einem relativ kürzeren Abstand bezüglich einer jeweiligen zugehörigen Abstrahlungsplatte (10, 11) und in einem relativ größeren Abstand bezüglich der anderen Abstrahlungsplatte (10, 11) positioniert ist.

2. Induktionsofen (1) nach Anspruch 1, bei dem die erste und zweite Spule (L1, L2) ebene Spiralinduktionsspulen sind, die im Wesentlichen parallel zueinander sind.

3. Induktionsofen (1) nach einem der vorhergehenden Ansprüche, ferner mit einem ersten und einem zweiten Schutzschild (21, 22), die entsprechend zu der ersten und zweiten Induktionsspule (L1, L2) gehören.

4. Induktionsofen (1) nach Anspruch 3, bei dem die Schutzschilde eine erste und zweite Schutzplatte (21, 22) aufweisen, in die die dazugehörige Induktionsspule (L1, L2) zumindest teilweise eingebettet ist.

5. Induktionsofen (1) nach Anspruch 4, bei dem die Schutzplatten (20, 21) aus einem Keramikmaterial bestehen.

6. Induktionsofen nach einem der vorhergehenden Ansprüche, ferner mit einer Trägervorrichtung (24), die zum Koppeln einer der Induktionsspulen (L2) oder einer mobilen Induktionsspule (L2) an dem Gehäuseaufbau (2) vorgesehen ist, wobei die Trägervorrichtung zum Bewegen der mobilen Induktionsspule (L2) bezüglich des Gehäuseaufbaus (2) steuerbar ist, um den Abstand zwischen den Induktionsspulen (L1, L2) durch Steuern der Trägervorrichtung (24) zu variieren, um die Spulen (L1, L2) zwischen einer ersten Betriebsbedingung, wo die Spulen (L1, L2) relativ nah zueinander sind, und einer zweiten Betriebsbedingung zu bewegen, wo die Spulen (L1, L2) in einem relativ größeren Abstand zueinander sind.

7. Induktionsofen (1) nach Anspruch 6, ferner mit einer weiteren Trägervorrichtung (25, 26) für die andere (L1) der Induktionsspulen, wobei die weitere Trägervorrichtung (25, 26) zumindest ein Kopplungselement (26) zum Einstellen der Position, zum Sicherstellen einer korrekten Positionierung der anderen Induktionsspule (L1) bezüglich der mobilen Induktionsspule (L2) aufweist, wenn der Induktionsofen (1) die erste Betriebsbedingung erreicht.

8. Induktionsofen (1) nach Anspruch 6 oder 7, bei dem zumindest eine der Trägervorrichtungen eine Metallplatte (25, 27) aufweist, die eine Durchtrennung (50) aufweist, die sich von einem Mittelabschnitt (33) zu einem Randabschnitt (51) der Metallplatte (25, 27) erstreckt.

9. Induktionsofen (1) nach einem der vorhergehenden Ansprüche, bei dem der Eindringungstiegel (7) eine ringförmige Wand (12) aufweist, die gegen eine der Abstrahlungsplatten (10, 11) liegt.

10. Induktionsofen (1) nach einem der vorhergehenden Ansprüche, bei dem die erste und zweite Spule (L1, L2) unabhängig und getrennt voneinander sind, wobei jede derart gestaltet ist, dass sie von einer entsprechenden Quelle elektrischen Stroms versorgt wird.

11. Induktionsofen (1) nach Anspruch 10, mit einem Steuersystem (36) zum Festlegen eines Intensitätsverhältnisses zwischen den elektrischen Strömen.

12. Induktionsofen (1) nach einem der vorhergehenden Ansprüche, bei dem zumindest eine (10) der zwei Abstrahlungsplatten (10, 11) zumindest eine erste Durchgangsöffnung (31) aufweist, die in Kommunikation mit der Eindringungskammer (13) ist, die so vorgesehen ist, dass Dämpfe abgesaugt werden können, die innerhalb der Eindringungskammer (13) während des Betriebs des Ofens gebildet werden.

13. Induktionsofen (1) nach Anspruch 12 in Abhängigkeit von Anspruch 4, bei dem die Schutzplatte (21), in der die Spule eingebettet ist, die zu der Abstrahlungsplatte (10) gehört, die mit der erste Durchgangsöffnung (31) versehen ist, eine zweite Durchgangsöffnung (32) aufweist, die gegenüber der ersten Durchgangsöffnung (31) ist.

14. Induktionsofen (1) nach einem der vorhergehenden Ansprüche, bei dem der Induktionsofen ferner eine seitliche ringförmige Wand (16) aufweist, die aus einem thermisch isolierenden Material besteht, die seitlich eine isolierende Kammer (8) definiert, die die Eindringungskammer (13) umgibt, wobei die isolierende Kammer (8) nach oben und unten durch zumindest eine der Abstrahlungsplatten (10, 11) beschränkt ist.

15. Eindringungsverfahren (10) für ein halbfertiges Werkstück (14) mit den folgenden Schritten:
- Einführen (102) des halbfertigen Werkstücks (14) in einen Induktionsofen (1) mit einem Eindringungstiegel, der eine Eindringungskammer (13) definiert, und einer ersten (10) und zweiten (11) gegenseitig parallelen und beabstandeten Abstrahlungsplatte, die aus einem Suszeptormaterial bestehen, wobei der Ofen (1) ferner zumindest eine Induktionsspule (L1, L2) aufweist;
- Erwärmen (105) der Eindringungskammer (13) durch Abstrahlung durch Erwärmen der Abstrahlungsplatten (10, 11) durch Induktionseffekt:
**dadurch gekennzeichnet, dass**
die Induktionsspule (L1, L2) eine erste (L1) und zweite (L2) Spiralspule aufweist, wobei jede dieser Spiralspulen in einem relativ kürzeren Abstand bezüglich einer entsprechenden Abstrahlungsplatte (10, 11) und in einem relativ größeren Abstand bezüglich der anderen Abstrahlungsplatte (10, 11) positioniert ist und wobei der Erwärmungsschritt einen Schritt vom Erwärmen jeder Abstrahlungsplatte (10, 11) mittels der Spiralinduktionsspule (L1, L2) aufweist, die zu derselben gehört.

16. Eindringungsverfahren (100) nach Anspruch 15, bei dem die Induktionsspulen (L1, L2) zwei getrennte und unabhängige Spulen sind und wobei der Erwärmungsschritt (104) den Schritt von Versorgen der Spulen mit einem entsprechenden elektrischen Strom umfasst.

17. Eindringungsverfahren (100) nach Anspruch 16, ferner mit dem Schritt von Aufbauen und Festlegen eines bestimmten Intensitätsniveaus für jeden der zugeführten Ströme, um ein gleichförmiges Erwärmen der Eindringungskammer und des halbfertigen Werkstücks (14) zu erreichen.

18. Eindringungsverfahren (100) nach einem der Ansprüche 15 bis 17, bei dem das halbfertige Werkstück (14) ein Bremsband für eine Scheibe einer Scheibenbremse ist.

## Revendications

1. Four à induction (1) comprenant :
- une structure de logement (2, 6) en forme de boîte, qui délimite une chambre interne (3) du four à induction ;
- un creuset d'infiltration (7) logé dans la chambre interne (3) et comprenant des première (10) et seconde (11) plaques rayonnantes mutuellement parallèles et espacées, composées d'un matériau suscepteur, et une chambre d'infiltration (13), qui est intercalée entre les plaques rayonnantes (10, 11) afin d'être chauffée par les plaques, la chambre d'infiltration étant utilisée pour loger une pièce semi-finie (14), à soumettre à une infiltration, et un matériau d'infiltration (15) ;
- au moins une bobine d'induction (L1, L2) logée dans la chambre interne (3) devant recevoir au moins un courant électrique (i₁, i₂) en vue du chauffage par induction des plaques rayonnantes (10, 11) ;
**caractérisé en ce que**
la bobine d'induction (L1, L2) comprend des première (L1) et seconde (L2) bobines d'induction en spirale, chacune des bobines en spirale (L1, L2) étant positionnée à une distance relativement plus courte par rapport à une plaque rayonnante (10, 11) associée respective et à une distance relativement plus longue par rapport à l'autre plaque rayonnante (10, 11).

2. Four à induction (1) selon la revendication 1, dans lequel les première et seconde bobines (L1, L2) sont des bobines à induction en spirale planes, qui sont globalement parallèles l'une à l'autre.

3. Four à induction (1) selon l'une quelconque des revendications précédentes, comprenant également des premier et second écrans de protection (21, 22) qui sont associés respectivement aux première et seconde bobines d'induction (L1, L2).

4. Four à induction (1) selon la revendication 3, dans lequel lesdits écrans de protection comprennent des première et seconde plaques de protection (21, 22), dans lesquelles la bobine d'induction (L1, L2) associée est au moins partiellement encastrée.

5. Four à induction (1) selon la revendication 4, dans lequel lesdites plaques de protection (20, 21) se composent d'un matériau céramique.

6. Four à induction selon l'une quelconque des revendications précédentes, comprenant également un dispositif de support (24), utilisé pour coupler l'une desdites bobines d'induction (L2), ou une bobine d'induction mobile (L2), à ladite structure de logement (2), ledit dispositif de support pouvant être commandé pour déplacer ladite bobine d'induction mobile (L2) par rapport à la structure de logement (2), afin de faire varier la distance entre lesdites bobines d'induction (L2 bobine d'induction (L1, L2) en commandant ledit dispositif de support (24), afin de déplacer lesdites bobines (L1, L2) entre un premier état de fonctionnement, dans lequel lesdites bobines (L1, L2) sont relativement proches l'une de l'autre, et un second état de fonctionnement, dans lequel lesdites bobines (L1, L2) se trouvent à une distance relativement plus longue l'une de l'autre.

7. Four à induction (1) selon la revendication 6, comprenant en outre un dispositif de support supplémentaire (25, 26) destiné à l'autre (L1) desdites bobines d'induction, ledit dispositif de support supplémentaire (25, 26) comprenant au moins un élément de couplage (26) destiné à ajuster la position, pour garantir un positionnement correct de ladite autre bobine d'induction (L1) par rapport à la bobine d'induction mobile (L2), lorsque le four à induction (1) atteint le premier état de fonctionnement.

8. Four à induction (1) selon la revendication 6 ou 7, dans lequel au moins un desdits dispositifs de support comprend une plaque métallique (25, 27) possédant une découpe traversante (50), qui s'étend d'une partie centrale (33) à une partie périphérique (51) de ladite plaque métallique (25, 27).

9. Four à induction (1) selon l'une quelconque des revendications précédentes, dans lequel le creuset d'infiltration (7) comprend une paroi annulaire (12) qui repose contre l'une desdites plaques rayonnantes (10, 11).

10. Four à induction (1) selon l'une quelconque des revendications précédentes, dans lequel les première et seconde bobines (L1, L2) sont indépendantes et séparées l'une de l'autre, chacune étant telle qu'elle est alimentée par une source de courant électrique respective.

11. Four à induction (1) selon la revendication 10, comprenant un système de commande (36) destiné à régler un rapport d'intensité entre lesdits courants électriques.

12. Four à induction (1) selon l'une quelconque des revendications précédentes, dans lequel au moins une (10) desdites deux plaques rayonnantes (10, 11) comprend au moins une première ouverture traversante (31) qui est en communication avec la chambre d'infiltration (13), utilisée pour permettre l'extraction des vapeurs formées à l'intérieur de ladite chambre d'infiltration (13) pendant le fonctionnement dudit four.

13. Four à induction (1) selon la revendication 12, dépendante de la revendication 4, dans lequel la plaque de protection (21), dans laquelle est encastrée la bobine associée à ladite plaque rayonnante (10), dotée de ladite première ouverture traversante (31), comprend une seconde ouverture traversante (32) qui est opposée à ladite première ouverture traversante (31).

14. Four à induction (1) selon l'une quelconque des revendications précédentes, dans lequel le four à induction comprend en outre une paroi annulaire latérale (16) composée d'un matériau d'isolation thermique, qui délimite latéralement une chambre d'isolation (8) entourant la chambre d'infiltration (13), la chambre d'isolation (8) étant délimitée vers le haut et vers le bas par au moins une desdites plaques rayonnantes (10, 11).

15. Processus d'infiltration (100) d'une pièce semi-finie (14) comprenant les étapes consistant à :
- introduire (102) ladite pièce semi-finie (14) dans un four à induction (1) comprenant un creuset d'infiltration délimitant une chambre d'infiltration (13), des première (10) et seconde (11) plaques rayonnantes mutuellement parallèles et espacées, composées d'un matériau suscepteur, ledit four (1) comprenant au moins une bobine d'induction (L1, L2) ;
- chauffer (105) la chambre d'infiltration (13) par rayonnement, en chauffant les plaques rayonnantes (10, 11) par effet d'induction :
**caractérisé en ce que**
la bobine d'induction (L1, L2) comprend des première (L1) et seconde (L2) bobines en spirale, chacune de ces bobines en spirale étant positionnée à une distance relativement plus courte par rapport à une plaque rayonnante (10, 11) et à une distance relativement plus longue par rapport à l'autre plaque rayonnante (10, 11), et l'étape de chauffage comprend une étape consistant à chauffer chaque plaque rayonnante (10, 11) à l'aide de la bobine d'induction en spirale (L1, L2) qui lui est associée.

16. Processus d'infiltration (100) selon la revendication 15, dans lequel les bobines d'induction (L1, L2) sont deux bobines séparées et indépendantes, et dans lequel l'étape de chauffage (104) comprend l'étape consistant à apporter auxdites bobines un courant électrique respectif.

17. Processus d'infiltration (100) selon la revendication 16, comprenant également l'étape consistant à établir et à régler un niveau d'intensité spécifique pour chacun desdits courants apportés, afin d'obtenir un chauffage homogène de ladite chambre d'infiltration et de ladite pièce semi-finie (14).

18. Processus d'infiltration (100) selon l'une quelconque des revendications 15 à 17, dans lequel ladite pièce semi-finie (14) est une bande de freinage pour un disque d'un frein à disque.
